# EUROPEAN PATENT SPECIFICATION

(11) **EP 3 239 685 B1**
(45) Date of publication and mention of the grant of the patent: **12.06.2019**
(21) Application number: 17166266.1
(22) Date of filing: 12.04.2017
(51) Int. Cl.: G01M 15/14, F01D 21/00, G01B 11/16, F03D 17/00, B63H 5/07, B64D 27/10, B64D 27/16, B64D 33/02, B64D 45/00, F01D 17/02, F01D 21/10, B64D 47/08, F04D 15/00, F02C 7/04, G02B 26/00, G02B 26/08, G03B 15/00, H04N 5/232, H04N 7/18, G03B 17/08

(54) **IMAGING A ROTATING COMPONENT**
ABBILDUNG EINER ROTIERENDEN KOMPONENTE
IMAGERIE D'UN COMPOSANT ROTATIF

(30) Priority: 29.04.2016 GB 201607456
(43) Date of publication of application: 01.11.2017
(73) Proprietor: Rolls-Royce plc, London SW1E 6AT (GB)
(72) Inventor: Miller, David, Derby, Derbyshire DE24 8BJ (GB)
(74) Representative: Rolls-Royce plc

(56) References cited:
- EP-A2- 1 742 015
- DE-A1-102011 001 268

## Description

### TECHNICAL FIELD

The present invention relates to an imaging apparatus for imaging a rotating component.

### BACKGROUND OF THE INVENTION

It is often desirable under test and/or service conditions to image a rotating component, such as the blades of a fan in a turbofan engine, or the blades of a marine propeller.

A known approach involves providing multiple cameras which are mounted upon and rotate with a helicopter rotor - typically one per blade. However, this approach is not suitable for components that rotate at higher speed due to the attendant increase rotational forces, and in any event is highly sensitive to any out-of-balance condition of the imaging system.

Strobe cameras which remain static with respect to the component may also be used, but it is difficult to synchronise the strobe rate with the rotation rate of the component, particular during accelerations thereof.

Exemplary monitoring systems are known from DE 10 2011 001 268 A1 and EP 1 742 015 A2.

### SUMMARY OF THE INVENTION

The present invention is therefore directed towards an imaging apparatus for imaging the fan of an aircraft engine according to claim 1.

The mirror may have a variable focal length. The mirror may be deformable to vary its focal length. The camera may be a light field camera.

The camera may be configured to produce individual still images. The camera may be configured to produce video. The camera may be configured to produce both individual still images and video.

The camera may be a digital camera. The imaging apparatus may comprise a data transmission device to transmit digital still images or video. The imaging apparatus may comprise a data storage device to store digital still images or digital video.

The imaging apparatus is, according to the invention, of conical form with an apex that tapers to a base radius. The mirror is located at an apex end with the reflective surface being directed toward a base end. The field of view of the mirror is wider than the base radius. The camera is located at a base end. The camera is directed towards the apex end.

The mirror is located on the axis of the imaging apparatus. The mirror is axisymmetric around the axis of imaging apparatus.

The imaging apparatus is a nose cone for imaging the fan of an aircraft engine. The aircraft engine may be a turbofan engine. The aircraft engine may be a turboprop engine.

There is therefore also provided an aircraft engine having a fan with the nose cone mounted on it. The field of view of the mirror includes at least a portion of the fan.

### BRIEF DESCRIPTION OF THE DRAWINGS

The invention will now be described by way of example only with reference to the accompanying drawings, which are purely schematic and not to scale, and in which:
Figure 1 shows a sectional side view of a turbofan engine;
Figure 2 shows a plan view of the fan of the engine of Figure 1;
Figure 3 shows the nose cone of the fan of Figure 2;
Figure 4 shows components within the camera of the nose cone of Figure 3.

### DETAILED DESCRIPTION OF THE INVENTION

### Figure 1

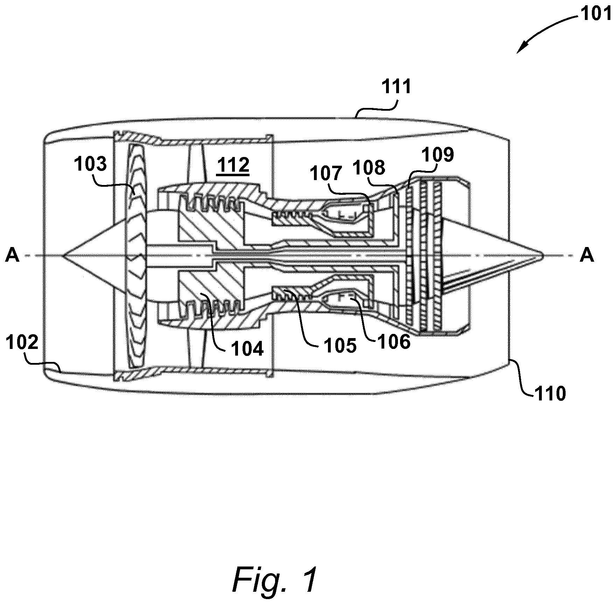

A turbofan engine **101** for an aircraft is shown in Figure 1, components of which may be imaged using an imaging apparatus according to an aspect of the present invention.

The engine **101** has a principal and rotational axis **A-A** and comprises, in axial flow series, an air intake **102,** a propulsive fan **103,** an intermediate pressure compressor **104,** a high-pressure compressor **105,** combustion equipment **106,** a high-pressure turbine **107,** an intermediate pressure turbine **108,** a low-pressure turbine **109,** and an exhaust nozzle **110.** A nacelle **111** generally surrounds the engine **101** and defines both the intake **102** and the exhaust nozzle **110.**

The engine **101** works in the conventional manner so that air entering the intake **102** is accelerated by the fan **103** to produce two air flows: a first air flow into the intermediate pressure compressor **104** and a second air flow which passes through a bypass duct **112** to provide propulsive thrust. The intermediate pressure compressor **104** compresses the air flow directed into it before delivering that air to the high pressure compressor **105** where further compression takes place.

The compressed air exhausted from the high-pressure compressor **105** is directed into the combustion equipment **106** where it is mixed with fuel and the mixture combusted. The resultant hot combustion products then expand through, and thereby drive the high pressure turbine **107,** intermediate pressure turbine **108,** and low pressure turbine **109** before being exhausted through the nozzle **110** to provide additional propulsive thrust. The high pressure turbine **107,** intermediate pressure turbine **108,** and low pressure turbine **109** drive respectively the high pressure compressor **105,** intermediate pressure compressor **104,** and fan **103,** each by a suitable interconnecting shaft.

### Figure 2

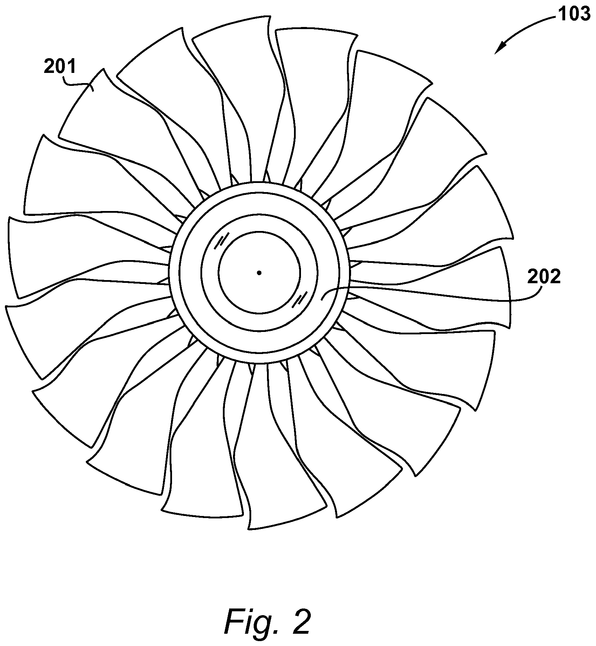

The fan **103** of engine **101** is shown in plan view in Figure 2.

It is particularly important to ensure that the blades **201** of the fan **103** are optimised both aerodynamically and mechanically. This involves performing various testing procedures to validate the design of the fan. For example, it may be necessary to determine whether the blades **201** of the fan **103** vibrate, and if so, the effect of the vibration of a particular blade on those adjacent to it. Further, it may be necessary to perform icing tests in which accretion of ice on the fan blades is forced to occur, which process needs to be analysed. In a further example, bird-strike tests may need to be performed and thus a determination made as to the resistance of the fan **103** to failure.

It may also be desirable to perform monitoring of the fan **103** during normal operation of the engine **101** as part of an ongoing engine performance and health monitoring strategy.

Thus in the present example, the fan **103** includes an imaging apparatus for imaging the fan **103** (a rotatable component) as it rotates. In this example, the imaging apparatus takes the form of a nose cone **202,** which is configured in accordance with an aspect of the present invention. The nose cone **202** is releasably attached to the fan **103** in the known manner, i.e. to the disk or central portion of the blisk depending upon the configuration of the fan.

In use, as the fan **103** rotates, driven by the low pressure turbine **109,** so too does the nose cone **202,** as it is fixed thereto.

### Figure 3

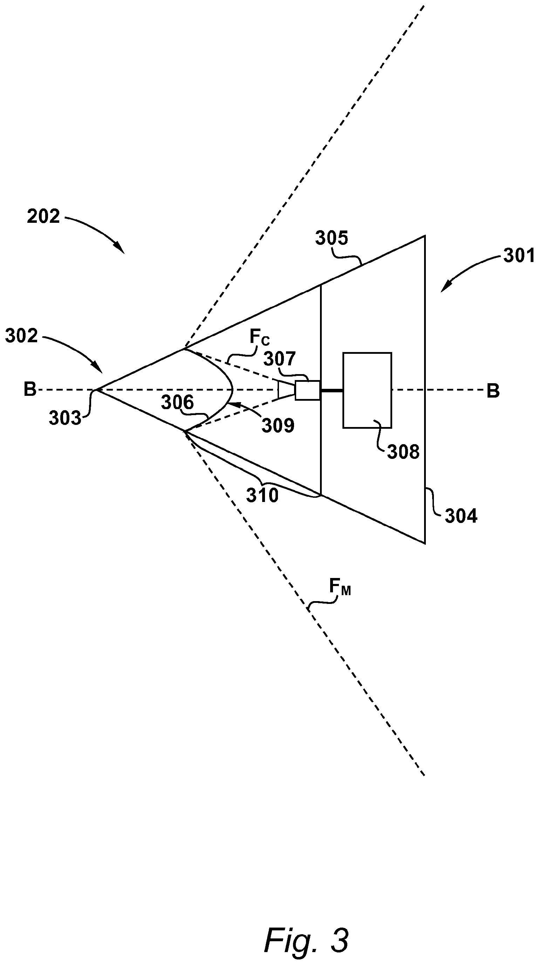

A schematic view of nose cone **202** is shown in Figure 3.

The nose cone **202** has an axis **B-B** and has a proximal end **301** and a distal end **302.** The proximal end **301** is configured to be attached to the fan **103** utilising standard fixings (not shown) of the known type. In practice, the fixings will align the nose cone **202** such that its axis **B-B** is coincident with the principal rotational axis **A-A** of the engine **101.**

In this example, the nose cone **202** is generally conical in shape, and thus the distal end **302** forms an apex **303,** which tapers to a base radius **304.** An outer wall **305** connects the two ends **301** and **302,** i.e. the apex to the base radius in the present example.

Imaging is achieved by a combination of a convex mirror **306** located towards the distal end **302** (i.e. at the apex end of the nose cone **202**), and a camera **307** located towards the proximal end **303** (i.e. at the base end of the nose cone **202**). A power supply in the form of a battery pack **308** is also provided towards the proximal end **301** of the nose cone **202** and is connected with the camera **307** to provide power thereto.

The mirror **306** has a reflective surface **308** which is directed towards the proximal end **301** of the nose cone **202.** In the present example, the mirror **306** is located on and is axisymmetric around the axis **B-B** of the nose cone **202.** In alternative embodiments, however, the mirror **306** may be located off-axis, and/or may be asymmetric. In this case, rotational balance may be restored with appropriate balance weights or equivalent measures, for example. The reflective surface **308** of the mirror **306** is parabolic in the present embodiment so that rays are brought into focus at the same point. In alternative embodiments, a spherical reflective surface could be used, or any other convex shape.

The camera **307** is directed towards the distal end **302** of the nose cone **202.** In this way, the camera **307** images the light reflected by the reflective surface **309** of the mirror **306.** Again, in this example, the camera is located on the axis **B-B** of the nose cone **202.** However, as with the mirror **306,** the camera **307** may be located off-axis with measures taken to ensure balance of the nose cone **202** is acceptable. Thus, the mirror and the camera may both be on-axis, the mirror may be off-axis and the camera on-axis, the mirror may be on-axis and the camera off-axis, or the mirror and the camera may both be off-axis.

In order to achieve imaging of the rotating component, i.e. the fan **103,** the mirror **306** has a field of view **F_{M}** which is wider than the nose cone **202.** It should be emphasised that the Figure is not to scale, and the field of view **F_{M}** may be wider or narrower than that illustrated.

To allow light to reach the reflective surface **309** of the mirror **306,** the outer wall **305** of the nose cone **202** has a transparent portion **310.** Thus at least a portion of the outer wall **305** is transparent to allow light to enter the imaging apparatus and to thereby reflect from the mirror into the camera. The transparent portion **310** extends around the full lateral surface of the nose cone **202.** However, in examples useful to understand the invention, the transparent portion **310** may only extend around a part of the full lateral surface. There may be multiple transparent portions distributed around the full lateral surface.

Furthermore, in the present example, the transparent portion **310** is a transparent acrylic, but other materials may of course be substituted as appropriate, possibly with a glass, for example. In an alternative embodiment, it is envisaged that the whole outer wall **305** may be transparent rather than just the transparent portion **310.**

As described previously, the camera **307** images the light reflected by the reflective surface **308** of the mirror **306.** The camera **307** has a field of view **F_{C}** which includes the mirror **306.** In the present example, the field of view **F_{C}** is centred on the mirror.

Again, however, the field of view **F_{C}** may differ from that illustrated in the Figure. Indeed, in alternative embodiments, the field of view **F_{C}** may be variable by the provision of a zoom lens in the camera. It may also be off-centre with respect to the mirror. So long as the field of view **F_{C}** includes at least part of the mirror, which has a field of view **F_{M}** which includes at least part of the rotating component, imaging as contemplated by the present invention may be achieved.

It will be appreciated by those skilled in the art that the field of view **F_{M}** of the mirror is dependent on its focal length. Thus, in an embodiment, the mirror **306** has a variable focal length. To achieve this, the mirror may be configured to be deformable such that the geometry of the reflective surface **309** results in a change in focal length. Appropriate re-focussing of the camera **307** may then be performed.

Additionally, or separately, the camera **307** may be a light-field camera. In such a case, focussing need not take place as both intensity and direction of the light rays entering the camera lens are recorded. As an example, the light-field camera may be a plenoptic-type camera.

### Figure 4

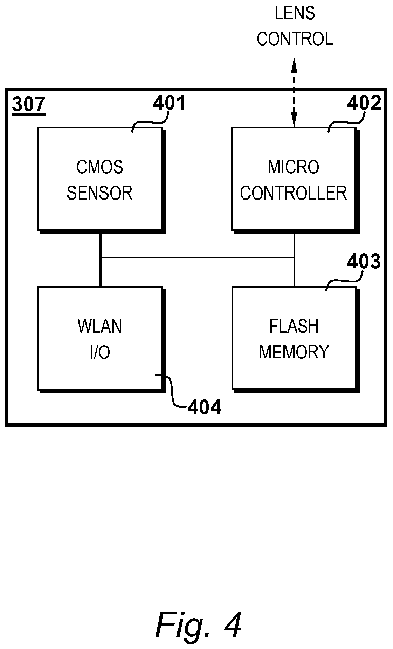

A schematic of the components within camera **307** is shown in Figure 4. The lens is omitted for clarity, but it will be appreciated by those skilled in the art that the lens will be a typical camera lens appropriate for focussing light reflected by mirror **306.** It will be appreciated that the camera **307** is generally of standard form.

In the present example, the camera **307** is a digital camera and therefore includes an electronic image sensor, which in the present example is a CMOS sensor **401.** The sensor **401** operates under the control and supplies output data to a processing device, which in this example is a microcontroller **402.** The microcontroller **402** also includes a degree of built-in memory in the form of ROM which stores appropriate program instructions for camera operation and image processing, etc. The microcontroller **402** is also connected with the lens (not shown) of the camera to perform focussing in the present example.

In the present example, the camera **307** is configured to, by means of sensor **401** and microcontroller **402,** produce individual still images and/or video in digital format. Thus in operation, the sensor **401** converts light into electrical signals which are digitised, processed and encoded to an appropriate data file format by the microcontroller **402.** In a specific embodiment, the microcontroller **402** performs a correction procedure on the images and/or video. As the geometry and distortion caused by the mirror **306** is a deterministic process, appropriate characterisation may be carried out and, for example, a transformation matrix defined and applied to the captured images and/or video to correct said distortion.

The still images and/or video may then be stored for later retrieval to non-volatile memory in the form of a Flash memory device **403.** In addition, or alternatively, the still images and/or video may be transmitted to a receiving station by a data transmission device, such as a wireless local area network (WLAN) interface **404.** In the present example, the WLAN interface **404** may transmit the digital still images or digital video to a receiving device on the same wireless LAN. For example, if the engine **101** were being tested on a test bed, the digital still images or digital video may be transmitted to a nearby receiver for analysis along with any other parameters being monitored. In a further example, the engine **101** may be being tested during flight, with a receiver being provided on the aircraft for in-flight analysis.

In use, the nose cone **202** is attached to the fan **103** and rotates therewith. In this way, the fan **103** appears static in the images produced by the camera **307** - the nacelle **111** and the rest of the outside environment would appear to rotate. In this way, the images may be used to analyse deflections in the blades of the fan **103** caused by vibration, loading, or impact. Given the field of view **F_{M}** may encompass the entirety of the fan **103,** the images may be particularly helpful in identifying whole-fan events, or the effect of an event (such as a vibration) in one blade on another blade for example.

It will be appreciated by those skilled in the art that whilst the imaging apparatus shown in the example of Figure 3 is a nose cone for a fan of a turbofan aircraft engine, the present invention extends to other applications. In particular, it is envisaged that the nose cone **202** according to the present invention may be employed for imaging a propeller (i.e. a type of fan) attached to, for example, a turboprop aircraft engine.

In sum, therefore, it will be understood that the invention is not limited to the embodiments described herein, and so various modifications and improvements can be made without departing from the concepts described. Except where mutually exclusive, any of the features may be employed separately or in combination with any other features and the invention extends to and includes all combinations and sub-combinations of one or more features described herein.

## Claims

1. Imaging apparatus (202) for imaging the fan (103) of an aircraft engine (101), the imaging apparatus being a nose cone (202) for an aircraft engine (101), wherein the imaging apparatus is of conical form with an apex (303) defining an apex end (302), the apex tapering to a base radius (304) defining a base end (301) configured to be attached to the fan (103), **characterised in** having located therein:
a convex mirror (306) located at the apex end (302) and which is located on and is axisymmetric around the axis (B-B) of the nose cone (202), the mirror (306) having a reflective surface (309) which is directed toward the base end and having a field of view (F_{M}) wider than the base radius (304); and
a camera (307) at the base end (301), the camera (307) being directed towards the apex end (302) and having a field of view (F_{C}) which includes the mirror;
wherein the imaging apparatus has an outer wall (305) at least a portion (310) of which is transparent to allow light to enter the imaging apparatus and to thereby reflect from the mirror into the camera, wherein the transparent portion (310) extends around the full lateral surface of the imaging apparatus (202).

2. The imaging apparatus of claim 1, in which the field of view of the camera (F_{C}) is centred on the mirror (306).

3. The imaging apparatus of claim 1 or claim 2, in which the mirror (306) has a variable focal length (F_{M}).

4. The imaging apparatus of claim 3, in which the mirror (306) is deformable to vary its focal length (F_{M}).

5. The imaging apparatus of any one of claims 1 to 4, in which the camera (307) is a light field camera.

6. The imaging apparatus of any one of claims 1 to 5, in which the camera (307) is configured to produce one or more of:
individual still images;
video.

7. The imaging apparatus of any one of claims 1 to 6, in which the camera is a digital camera and comprises one or more of:
a data transmission device (404) to transmit digital still images or video;
a data storage device (403) to store digital still images or digital video.

8. The imaging apparatus of any preceding claim, in which the aircraft engine is one of:
a turbofan engine (101);
a turboprop engine.

9. An aircraft engine (101) having a fan (103) with the imaging apparatus of any preceding claim mounted thereon, wherein the field of view of the mirror (F_{M}) includes at least a portion of the fan.

## Patentansprüche

1. Abbildungsvorrichtung (202) zur Abbildung des Bläsers (103) eines Flugzeugmotors (101), wobei die Abbildungsvorrichtung ein Nasenkonus (202) für einen Flugzeugmotor (101) ist, wobei die Abbildungsvorrichtung eine konische Form mit einer Spitze (303) aufweist, die ein Spitzenende (302) definiert, wobei die Spitze konisch zu einem Basisradius (304) zuläuft, der ein Basisende (301) definiert, das konfiguriert ist, um am Bläser (103) angebracht zu werden, **dadurch gekennzeichnet, dass** darin angeordnet ist:
ein konvexer Spiegel (306), der am Spitzenende (302) angeordnet und an der und achssymmetrisch um die Achse (B-B) des Nasenkonus (202) angeordnet ist, wobei der Spiegel (306) eine reflektierende Oberfläche (309) aufweist, die zum Basisende gerichtet ist und ein Sichtfeld (F_{M}) aufweist, das breiter als der Basisradius (304) ist;
und eine Kamera (307) am Basisende (301), wobei die Kamera (307) zum Spitzenende (302) gerichtet ist und ein Sichtfeld (F_{c}) aufweist, das den Spiegel beinhaltet;
wobei die Abbildungsvorrichtung eine Außenwand (305) aufweist, von der mindestens ein Abschnitt (310) transparent ist, damit Licht in die Abbildungsvorrichtung eintreten und dadurch vom Spiegel in die Kamera reflektieren kann, wobei sich der transparente Abschnitt (310) um die gesamte laterale Oberfläche der Abbildungsvorrichtung (202) erstreckt.

2. Abbildungsvorrichtung nach Anspruch 1, wobei das Sichtfeld der Kamera (F_{c}) auf den Spiegel (306) zentriert ist.

3. Abbildungsvorrichtung nach Anspruch 1 oder Anspruch 2, wobei der Spiegel (306) eine variable Brennweite (F_{M}) aufweist.

4. Abbildungsvorrichtung nach Anspruch 3, wobei der Spiegel (306) verformbar ist, um seine Brennweite (F_{M}) zu variieren.

5. Abbildungsvorrichtung nach einem der Ansprüche 1 bis 4, wobei die Kamera (307) eine Lichtfeldkamera ist.

6. Abbildungsvorrichtung nach einem der Ansprüche 1 bis 5, wobei die Kamera (307) konfiguriert ist, um eines oder mehrere der folgenden zu erzeugen:
einzelne Standbilder;
Video.

7. Abbildungsvorrichtung nach einem der Ansprüche 1 bis 6, wobei die Kamera eine Digitalkamera ist und eines oder mehrere der folgenden umfasst:
eine Datenübertragungsvorrichtung (404) zum Übertragen digitaler Standbilder oder von Video; eine Datenspeichervorrichtung (403) zum Speichern digitaler Standbilder oder von Video.

8. Abbildungsvorrichtung nach einem der vorstehenden Ansprüche, wobei der Flugzeugmotor eines der folgenden ist:
ein Turbobläsermotor (101);
ein Tuboprop-Motor.

9. Flugzeugmotor (101) mit einem Bläser (103), der daran montiert die Abbildungsvorrichtung nach einem der vorstehenden Ansprüche aufweist, wobei das Sichtfeld des Spiegels (F_{M}) mindestens einen Abschnitt des Bläsers beinhaltet.

## Revendications

1. Appareil d'imagerie (202) destiné à produire des images de la soufflante (103) d'un moteur d'aéronef (101), ledit appareil d'imagerie étant un cône de nez (202) pour un moteur d'aéronef (101), ledit appareil d'imagerie étant de forme conique avec un sommet (303) définissant une extrémité de sommet (302), ledit sommet s'effilant jusqu'à un rayon de base (304) définissant une extrémité de base (301) conçue pour être fixée à la soufflante (103), **caractérisé en ce qu'**il comprend à l'intérieur :
un miroir convexe (306) situé à l'extrémité de sommet (302) et qui est situé sur l'axe (B-B) du cône de nez (202) et est axisymétrique autour de celui-ci, le miroir (306) possédant une surface réfléchissante (309) qui est dirigée vers l'extrémité de base et possédant un champ de vision (F_{M}) plus large que le rayon de base (304) ;
et une caméra (307) au niveau de l'extrémité de base (301), la caméra (307) étant dirigée vers l'extrémité de sommet (302) et possédant un champ de vision (F_{c}) qui comprend le miroir ;
ledit appareil d'imagerie possédant une paroi externe (305) dont au moins une partie (310) est transparente pour permettre à la lumière d'entrer dans l'appareil d'imagerie et de se réfléchir ainsi sur le miroir dans la caméra, ladite partie transparente (310) s'étendant autour de toute la surface latérale de l'appareil d'imagerie (202).

2. Appareil d'imagerie selon la revendication 1, ledit champ de vision de la caméra (F_{c}) étant centré sur le miroir (306).

3. Appareil d'imagerie selon la revendication 1 ou 2, ledit miroir (306) possédant une distance focale variable (F_{M}).

4. Appareil d'imagerie selon la revendication 3, ledit miroir (306) étant déformable pour faire varier sa distance focale (F_{M}).

5. Appareil d'imagerie selon l'une quelconque des revendications 1 à 4, ladite caméra (307) étant une caméra à champ lumineux.

6. Appareil d'imagerie selon l'une quelconque des revendications 1 à 5, ladite caméra (307) étant conçue pour produire l'une ou plusieurs :
images fixes individuelles ;
vidéos.

7. Appareil d'imagerie selon l'une quelconque des revendications 1 à 6, ladite caméra étant une caméra numérique et comprenant l'un ou plusieurs de :
un dispositif de transmission de données (404) pour transmettre des images fixes ou des vidéos numériques ;
un dispositif de stockage de données (403) pour stocker des images fixes numériques ou des vidéos numériques.

8. Appareil d'imagerie selon l'une quelconque des revendications précédentes, ledit moteur d'aéronef étant l'un :
d'un moteur de turboréacteur à double flux (101) ;
d'un moteur de turbopropulseur.

9. Moteur d'aéronef (101) possédant une soufflante (103) sur laquelle est monté l'appareil d'imagerie selon l'une quelconque des revendications précédentes, ledit champ de vision du miroir (F_{M}) comprenant au moins une partie de la soufflante.
